(19) **Europäisches Patentamt**

**European Patent Office**

**Office européen des brevets**

(11) **EP 1 313 233 B1**

(12) **EUROPEAN PATENT SPECIFICATION**

(45) Date of publication and mention
of the grant of the patent:
**11.01.2006 Bulletin 2006/02**

(51) Int Cl.:
**H04B 7/005** (2006.01)

(21) Application number: **02026085.7**

(22) Date of filing: **22.03.2000**

(54) **Combined closed loop/open loop power control in a time division duplex communication system**

Kombinierte Leistungsregelung in geschlossener und offener Schleife in einem
Zeitduplex-Kommunikationssystem

Commande de puissance combinée à boucle fermée/boucle ouverte d'un système de communication
duplex à répartition dans le temps

(84) Designated Contracting States:
**AT BE CH CY DE DK ES FI FR GB GR IE IT LI LU
MC NL PT SE**

(30) Priority: **22.03.1999 US 125417 P**
**28.05.1999 US 136556 P**
**28.05.1999 US 136557 P**

(43) Date of publication of application:
**21.05.2003 Bulletin 2003/21**

(62) Document number(s) of the earlier application(s) in
accordance with Art. 76 EPC:
**00921419.8 / 1 163 737**

(73) Proprietor: **INTERDIGITAL TECHNOLOGY
CORPORATION
Wilmington, DE 19801 (US)**

(72) Inventors:
• **Zeira, Ariela
Trumball, CT-06611 (US)**
• **Ozluturk, Faith M.
Port Washington, NY 11050 (US)**
• **Shin, Sung-Hyuk
Fort Lee, NJ 07024 (US)**

(74) Representative: **Henningsson, Gunnar et al
AWAPATENT AB,
Box 45086
104 30 Stockholm (SE)**

(56) References cited:
**EP-A- 0 682 419      WO-A-97/49197
WO-A-98/45962      US-A- 5 542 111
US-A- 5 859 838**

**Description**

**BACKGROUND**

This invention generally relates to spread spectrum time division duplex (TDD) communication systems. More particularly, the present invention relates to a spread spectrum time division duplex user equipment comprising means for controlling transmission power.

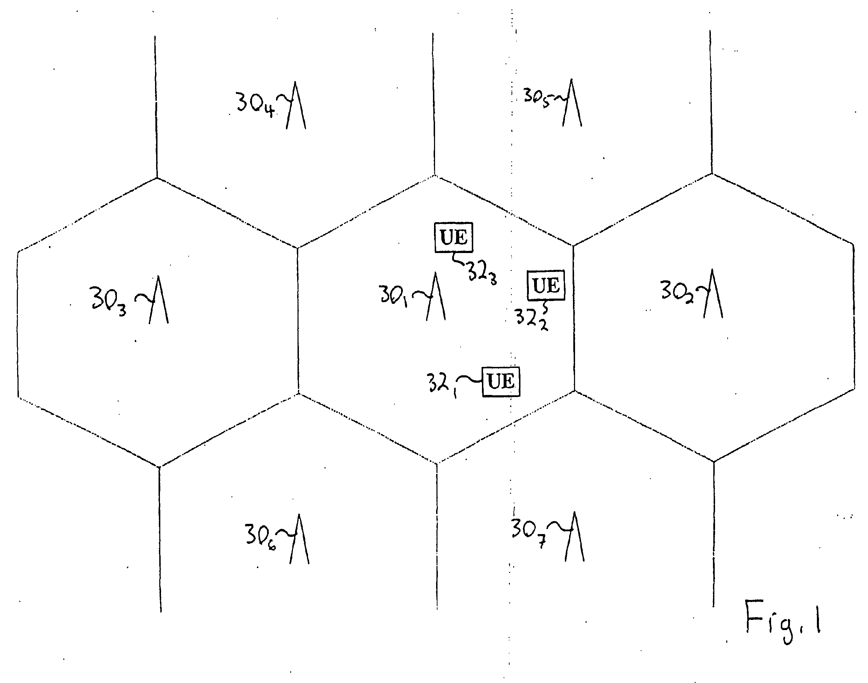

**Figure 1** depicts a wireless spread spectrum time division duplex (TDD) communication system. The system has a plurality of base stations $30_1$-$30_7$. Each base station $30_1$ communicates with user equipments (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

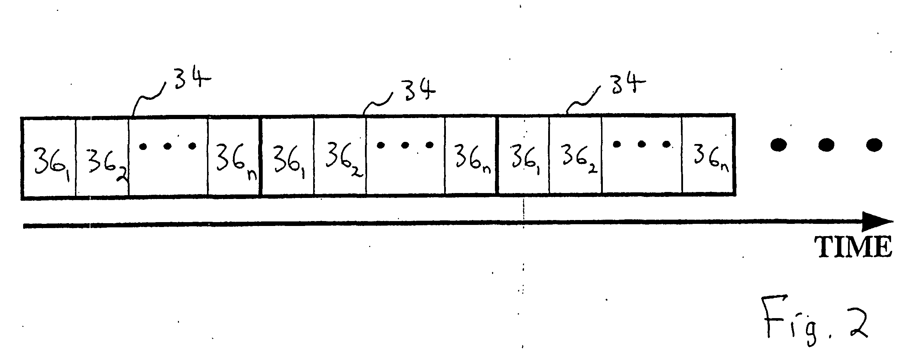

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as fifteen time slots. In such systems, a communication is sent in selected time slots $36_1$-$36_n$ using selected codes. Accordingly, one frame **34** is capable of carrying multiple communications distinguished by both time slot $36_1$-$36_n$ and code. The combination of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach to control transmission power levels is open loop power control. In open loop power control, typically a base station $30_1$ transmits to a UE $32_1$ a reference downlink communication and the transmission power level of that communication. The UE $32_1$ receives the reference communication and measures its received power level. By subtracting the received power level from the transmission power level, a pathloss for the reference communication is determined. To determine a transmission power level for the uplink, the downlink pathloss is added to a desired received power level at the base station $30_1$. The UE's transmission power level is set to the determined uplink transmission power level.

Another approach to control transmission power level is closed loop power control. In closed loop power control, typically the base station $30_1$ determines the signal to interference ratio (SIR) of a communication received from the UE $32_1$. The determined SIR is compared to a target SIR ($SIR_{TARGET}$). Based on the comparison, the base station $30_1$ transmits a power command, $b_{TPC}$. After receiving the power command, the UE $32_1$ increases or decreases its transmission power level based on the received power command.

Both closed loop and open loop power control have disadvantages. Under certain conditions, the performance of closed loop systems degrades. For instance, if communications sent between a UE and a base station are in a highly dynamic environment, such as due to the UE moving, such systems may not be able to adapt fast enough to compensate for the changes. The update rate of closed loop power control in TDD is 100 cycles per second which is not sufficient for fast fading channels. Open loop power control is sensitive to uncertainties in the uplink and downlink gain chains and interference levels.

One approach to combining closed loop and open loop power control was proposed by the Association of Radio Industries and Business (ARIB) and uses **Equations 1, 2,** and **3.**

$$T_{UE} = P_{BS}(n) + L \qquad\qquad \textbf{Equation 1}$$

$$P_{BS}(n) = P_{BS}(n\text{-}1) + b_{TPC}\,\Delta_{TPC} \qquad\qquad \textbf{Equation 2}$$

$$b_{TPC} \cdot \begin{cases} 1: \text{if } SIR_{BS} \langle SIR_{TARGET} \\ -1: \text{if } SIR_{BS} \rangle SIR_{TARGET} \end{cases}$$

**Equation 3**

$T_{UE}$ is the determined transmission power level of the UE $32_1$. L is the estimated downlink pathloss. $P_{BS}(n)$ is the desired received power level of the base station $30_1$ as adjusted by **Equation 2**. For each received power command, $b_{TPC}$, the desired received power level is increased or decreased by $\Delta_{TPC}$. $\Delta_{TPC}$ is typically one decibel (dB). The power command, $b_{TPC}$, is one, when the SIR of the UE's uplink communication as measured at the base station **30**, $SIR_{BS}$, is less than a target SIR, $SIR_{TARGET}$. Conversely, the power command is minus one, when $SIR_{BS}$ is larger than $SIR_{TARGET}$.

WO 97/49197 discloses the control of transmission power in the packet switched data transfer of a cellular radio system. When closed loop feedback is not available, open loop power control is used. A base station informs a terminal device as to the transmission power level after a transmission pause by the terminal device. The terminal device sets the same power to be its transmission power as prior to the pause corrected by the difference between a target level and the measured quality of the link.>

Under certain conditions, the performance of these systems degrades. For instance, if communications sent between a UE **32** and a base station **30** are in a highly dynamic environment, such as due to the **UE 32** moving, the path loss estimate for open loop severely degrades the overall system's performance. Accordingly, there is a need for alternate approaches to maintain signal quality and low transmission power levels for all environments and scenarios.

## SUMMARY

Combined closed loop/open loop power control controls transmission power levels in a spread spectrum time division duplex user equipment according to claim 1.

## BRIEF DESCRIPTION OF THE DRAWINGS

**Figure 1** illustrates a prior art TDD system.
**Figure 2** illustrates time slots in repeating frames of a TDD system.
**Figure 3** is a flow chart of combine closed loop/open loop power control.
**Figure 4** is a diagram of components of two communication stations using combined closed loop/open loop power control.
**Figures 5-10** depict graphs of the performance of a closed loop, ARIB's proposal and two (2) schemes of combined closed loop/open loop power control.

## DETAILED DESCRIPTION OF THE PREFERRED EMBODIMENTS

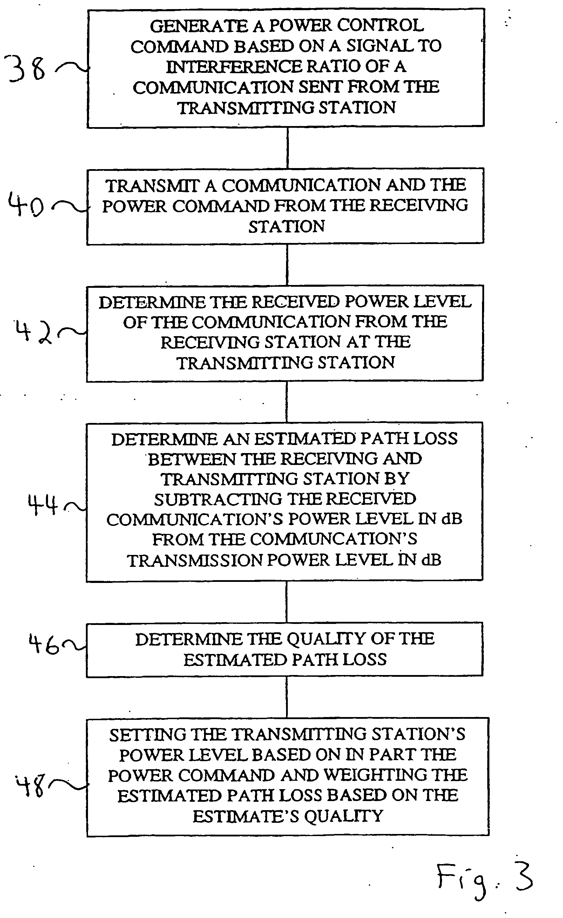

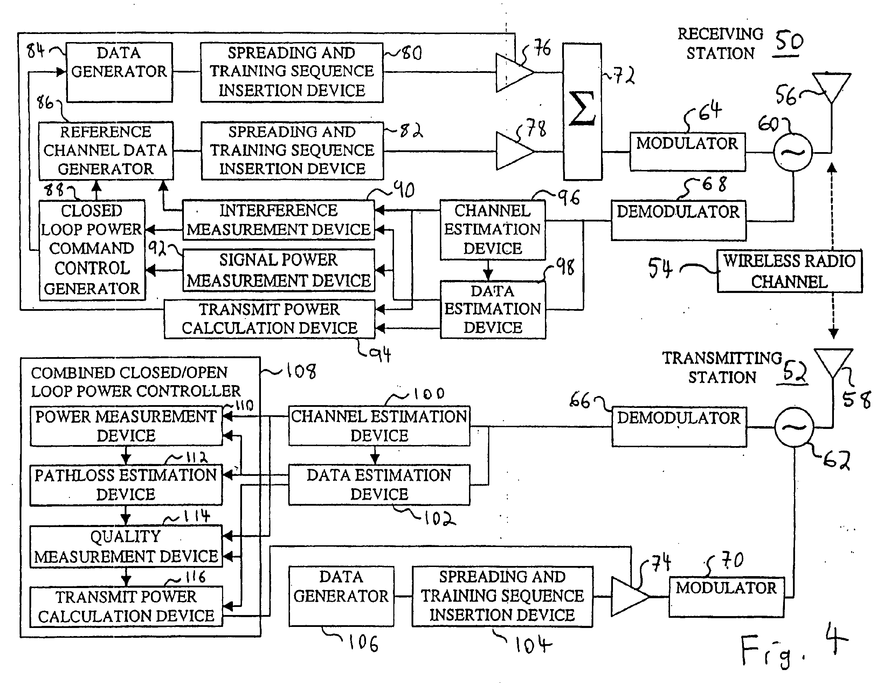

The preferred embodiments will be described with reference to the drawing figures where like numerals represent like elements throughout. Combined closed loop/open loop power control will be explained using the flow chart of **Figure 3** and the components of two simplified communication stations **50, 52** as shown in **Figure 4.** For the following discussion, the communication station having its transmitter's power controlled is referred to as the transmitting station **52** and the communication station receiving power controlled communications is referred to as the receiving station **50.** Since combined closed loop/open loop power control may be used for uplink, downlink or both types of communications, the transmitter having its power controlled may be located at a base station $30_1$, UE $32_1$ or both. Accordingly, if both uplink and downlink power control are used, the receiving and transmitting station's components are located at both the base station $30_1$ and UE $32_1$.

The receiving station **50** receives various radio frequency signals including communications from the transmitting station **52** using an antenna **56,** or alternately, an antenna array. The received signals are passed through an isolator **60** to a demodulator **68** to produce a baseband signal. The baseband signal is processed, such as by a channel estimation device **96** and a data estimation device **98,** in the time slots and with the appropriate codes assigned to the transmitting station's communication. The channel estimation device **96** commonly uses the training sequence component in the baseband signal to provide channel information, such as channel impulse responses. The channel information is used by the data estimation device **98**, the interference measurement device **90**, the signal power measurement device **92** and the transmit power calculation device **94**. The data estimation device **98** recovers data from the channel by estimating soft symbols using the channel information. Using the soft symbols and channel information, the transmit power calculation device **94** controls the receiving station's transmission power level by controlling the gain of an amplifier **76.**

The signal power measurement device **92** uses either the soft symbols or the channel information, or both, to determine the received signal power of the communication in decibels (dB). The interference measurement device **90** determines the interference level in dB, $I_{RS}$, within the channel, based on either the channel information, or the soft symbols generated by the data estimation device **102,** or both.

The closed loop power command generator **88** uses the measured communication's received power level and the interference level, $I_{RS}$, to determine the Signal to Interference Ratio (SIR) of the received communication. Based on a comparison of the determined SIR with a target SIR ($SIR_{TARGET}$), a closed loop power command is generated, $b_{TPC}$, such as a power command bit, $b_{TPC}$, **step 38.** Alternately, the power command may be based on any quality measurement of the received signal.

For use in estimating the path loss between the receiving and transmitting stations **50, 52** and sending data, the receiving station **50** sends a communication to the transmitting station **58,** step **40.** The communication may be sent on any one of various channels. Typically, in a TDD system, the channels used for estimating path loss are referred to as reference channels; although other channels may be used. If the receiving station **50** is a base station **30₁,** the communication is preferably sent over a downlink common channel or a common control physical channel (CCPCH). Data to be communicated to the transmitting station **52** over the reference channel is referred to as reference channel data. The reference data may, include, as shown, the interference level, $I_{RS}$, multiplexed with other reference data, such as the transmission power level of the reference channel, $T_{RS}$. The interference level, $I_{RS}$, and reference channel power level, $T_{RS}$, may be sent in other channels, such as a signaling channel, step **40.** The closed loop power control command, $b_{TPC}$, is typically sent in a dedicated channel, dedicated to the communication between the receiving station **50** and transmitting station **52.**

The reference channel data is generated by a reference channel data generator **86.** The reference data is assigned one or multiple resource units based on the communication's bandwidth requirements. A spreading and training sequence insertion device **82** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **78.** The amplified communication burst may be summed by a sum device **72** with any other communication burst created through devices, such as a data generator **84,** spreading and training sequence insertion device **80** and amplifier **76.**

The summed communication bursts are modulated by a modulator **64.** The modulated signal is passed through an isolator **60** and radiated by an antenna **56** as shown or, alternately, through an antenna array. The radiated signal is passed through a wireless radio channel **54** to an antenna **58** of the transmitting station **52.** The type of modulation used for the transmitted communication can be any of the those known to those skilled in the art, such as direct phase shift keying (DPSK) or quadrature phase shift keying (QPSK).

The antenna **58** or, alternately, antenna array of the transmitting station **52** receives various radio frequency signals. The received signals are passed through an isolator **62** to a demodulator **66** to produce a baseband signal. The baseband signal is processed, such as by a channel estimation device **100** and a data estimation device **102,** in the time slots and with the appropriate codes assigned to the communication burst of the receiving station **50.** The channel estimation device **100** commonly uses the training sequence component in the baseband signal to provide channel information, such as channel impulse responses. The channel information is used by the data estimation device **102** and a power measurement device **110.**

The power level of the processed communication corresponding to the reference channel, $R_{TS}$, is measured by the power measurement device **110** and sent to a pathloss estimation device **112, step 42.** Both the channel estimation device **100** and the data estimation device **102** are capable of separating the reference channel from all other channels. If an automatic gain control device or amplifier is used for processing the received signals, the measured power level is adjusted to correct for the gain of these devices at either the power measurement device **110** or the pathloss estimation device **112.** The power measurement device **110** is a component of the combined closed loop/open loop controller **108.** As illustrated in **Figure 4,** the combined closed loop/open loop power controller **108** consists of the power measurement device **110,** pathloss estimation device **112,** quality measurement device **114,** and transmit power calculation device **116.**

To determine the path loss, L, the transmitting station **52** also requires the communication's transmitted power level, $T_{RS}$. The transmitted power level, $T_{RS}$, may be sent along with the communication's data or in a signaling channel. If the power level, $T_{RS}$, is sent along with the communication's data, the data estimation device **102** interprets the power level and sends the interpreted power level to the pathloss estimation device **112.** If the receiving station **50** is a base station **30₁,** preferably the transmitted power level, $T_{RS}$, is sent via the broadcast channel (BCH) from the base station **30₁.** By subtracting the received communication's power level, $R_{TS}$ in dB, from the sent communication's transmitted power level, $T_{RS}$ in dB, the pathloss estimation device **112** estimates the path loss, L, between the two stations **50, 52, step 42.** In certain situations, instead of transmitting the transmitted power level, $T_{RS}$, the receiving station **50** may transmit a reference for the transmitted power level. In that case, the pathloss estimation device **112** provides reference levels for the path loss, L.

If a time delay exists between the estimated path loss and the transmitted communication, the path loss experienced by the transmitted communication may differ from the calculated loss. In TDD systems where communications are sent in differing time slots $36_1$-$36_n$, the time slot delay between received and transmitted communications may degrade the performance of an open loop power control system. Combined closed loop/open loop power control utilizes both closed loop and open loop power control aspects. If the quality of the path loss measurement is high, the system primarily acts as an open loop system. If the quality of the path loss measurement is low, the system primarily acts as a closed loop system. To combine the two power control aspects, the system weights the open loop aspect based on the quality of the path loss measurement.

A quality measurement device **114** in a weighted open loop power controller **108** determines the quality of the estimated path loss, **step 46.** The quality may be determined using the channel information generated by the channel estimation device **100,** the soft symbols generated by the data estimation device **102** or other quality measurement techniques. The estimated path loss quality is used to weight the path loss estimate by the transmit power calculation device **116.** If the power command, $b_{TPC}$, was sent in the communication's data, the data estimation device **102** interprets the closed loop power command, $b_{TPC}$. Using the closed loop power command, $b_{TPC}$, and the weighted path loss, the transmit power calculation device **116** sets the transmit power level of the receiving station **50, step 48.**

The following is one of the preferred combined closed loop/open loop power control algorithms. The transmitting station's power level in decibels, $P_{TS}$, is determined using Equations **4** and **6.**

$$P_{TS} = P_0 + G(n) + \alpha L \qquad \textbf{Equation 4}$$

$P_0$ is the power level that the receiving station **50** desires to receive the transmitting station's communication in dB. $P_0$ is determined by the desired SIR at the receiving station **50**, $SIR_{TARGET}$, and the interference level, $I_{RS}$, at the receiving station **50** using **Equation 5**.

$$P_0 = SIR_{TARGET} + I_{RS} \qquad \textbf{Equation 5}$$

$I_{RS}$ is either signaled or broadcasted from the receiving station 50 to the transmitting station **52.** For downlink power control, $SIR_{TARGET}$ is known at the transmitting station **52.** For uplink power control, $SIR_{TARGET}$ is signaled from the receiving station **50** to the transmitting station **52.** G(n) is the closed loop power control factor. **Equation 6** is one equation for determining G(n).

$$G(n) = G(n-1) + b_{TPC} \Delta_{TPC} \qquad \textbf{Equation 6}$$

G(n-1) is the previous closed loop power control factor. The power command, $b_{TPC}$, for use in **Equation 6** is either +1 or -1. One technique for determining the power command, $b_{TPC}$, is **Equation 3.** The power command, $b_{TPC}$, is typically updated at a rate of 100 ms in a TDD system, although other update rates may be used. $\Delta_{TPC}$ is the change in power level. The change in power level is typically 1 dB although other values may be used. As a result, the closed loop factor increases by 1 dB if $b_{TPC}$ is +1 and decreases by 1 dB if $b_{TPC}$ is -1.

The weighting value, $\alpha$, is determined by the quality measurement device **114.** $\alpha$ is a measure of the quality of the estimated path loss and is, preferably, based on the number of time slots, D, between the time slot of the last path loss estimate and the first time slot of the communication transmitted by the transmitting station 52. The value of $\alpha$ is from zero to one. Generally, if the time difference, D, between the time slots is small, the recent path loss estimate will be fairly accurate and $\alpha$ is set at a value close to one. By contrast, if the time difference is large, the path loss estimate may not be accurate and the closed loop aspect is most likely more accurate. Accordingly, a is set at a value closer to zero.

**Equation 7** is one equation for determining $\alpha$, although others may be used.

$$\alpha = 1 - (D - 1)/D_{max} \qquad \textbf{Equation 7}$$

$D_{max}$ is the maximum possible delay. A typical value for a frame having fifteen time slots is six. If the delay is $D_{max}$ or greater, a approaches zero. Using the calculated transmit power level, $P_{TS}$, determined by a transmit power calculation device **116,** the combined closed loop/open loop power controller **108** sets the transmit power of the transmitted communication.

Data to be transmitted in a communication from the transmitting station **52** is produced by a data generator **106.** The communication data is spread and time-multiplexed with a training sequence by the spreading and training sequence insertion device **104** in the appropriate time slots and codes of the assigned resource units producing a communication burst. The spread signal is amplified by the amplifier **74** and modulated by the modulator **70** to radio frequency.

The combined closed loop/open loop power controller **108** controls the gain of the amplifier **74** to achieve the determined transmit power level, $P_{TS}$, for the communication. The power controlled communication is passed through the isolator **62** and radiated by the antenna **58.**

**Equations 8** and **9** are another preferred combined closed loop/open loop power control algorithm.

$$P_{TS} = P_0 + K(n) \qquad \text{Equation 8}$$

$$K(n) = K(n-1) + b_{TPC} \, \Delta_{TPC} + \alpha L \qquad \text{Equation 9}$$

$K(n)$ is the combined closed loop/open loop factor. As shown, this factor includes both the closed loop and open loop power control aspects. **Equations 4** and **5** segregate the two aspects.

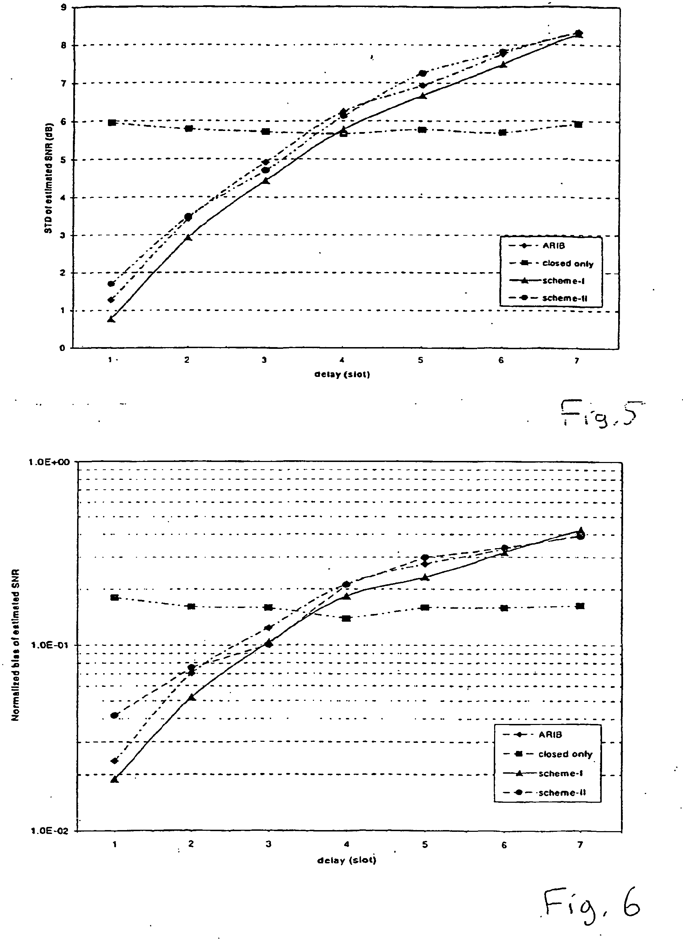

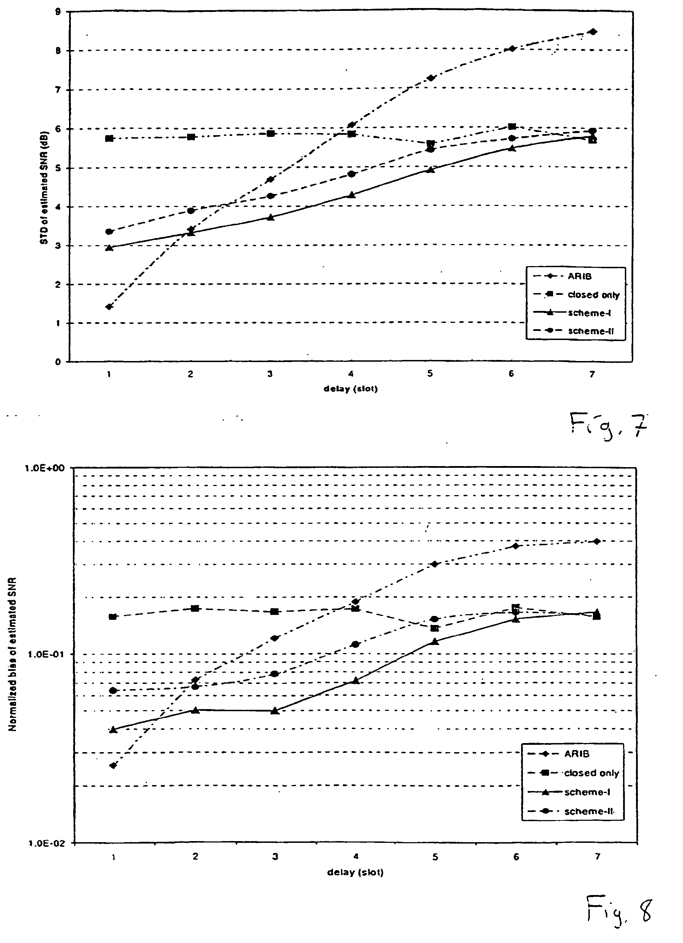

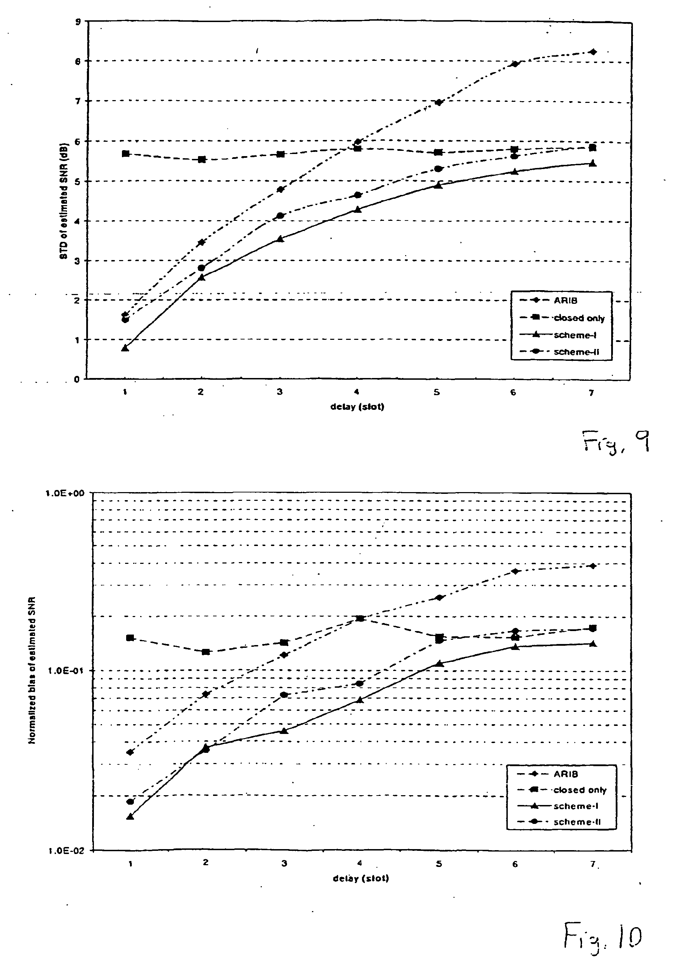

**Figures 5-10** depict graphs **118-128** illustrating the performance of a combined closed-loop/open-loop power control system. These graphs **118-128** depict the results of simulations comparing the performance of the ARIB proposed system, a closed loop, a combined open loop/closed loop system using **Equations 4** and **6** (scheme I) and a combined system using **Equations 8** and **9** (scheme II). The simulations were performed at the symbol rate. A spreading factor of sixteen was used for both the uplink and downlink channels. The uplink and downlink channels are International Telecommunication Union (ITU) Channel model [ITU-R M.1225, vehicular, type B). Additive noises were simulated as being independent of white Gaussian noises with unity variance. The path loss is estimated at the transmitting station **52** which is a UE **32$_1$** and in particular a mobile station. The BCH channel was used for the path loss estimate. The path loss was estimated two times per frame at a rate of 200 cycles per second. The receiving station **50,** which was a base station **30$_1$,** sent the BCH transmission power level over the BCH. RAKE combining was used for both the UE **32$_1$** and base station **30$_1$.** Antenna diversity combining was used at the base station **30$_1$.**

Graphs **118, 122, 126** depict the standard deviation of the received signal to noise ratio (SNR) at the base station **30$_1$** of the UE's power controlled communication as a function of the time slot delay, D. Graphs **120,124,128** depict the normalized bias of the received SNR as a function of the delay, D. The normalization was performed with respect to the desired SNR. Each point in the graphs **118-128** represents the average of 3000 Monte-Carlo runs.

Graphs **118, 120** depict the results for an $\alpha$ set at one. For low time slot delays (D<4), scheme **I** and II outperform closed loop power control. For larger delays (D≥4), closed loop outperforms both scheme I and II which demonstrates the importance of weighting the open loop and closed loop aspects.

Graphs **122, 124** depict the results for an a set at 0.5. As shown, for all delays excluding the maximum, schemes I and II outperform closed loop power control. The ARIB proposal only outperforms the others at the lowest delay (D=1).

Graphs **126, 128** depict the results for an $\alpha$ set using **Equation 7** with $D_{max}$ equal to six. As shown, schemes I and II outperform both closed loop and the ARIB proposal at all delays, D.

**Claims**

1. A spread spectrum time division duplex user equipment (52), the user equipment (52) using frames with time slots for communication, the user equipment (52) comprising means (58) for receiving power commands and a transmission power level and for receiving a first communication having said transmission power level in a first time slot from a first station (50), the user equipment (52) comprising means (110) for measuring a power level of the first communication as received and means (112) for determining a pathloss estimate based on in part the measured received first communication power level and the first communication transmission power level, the user equipment (52) being **characterized in that** it comprises:

   means (108) for setting a transmission power level for a second communication in a second time slot from the user equipment (52) to the first station (50) based on in part the pathloss estimate weighted by a quality factor and the power commands, wherein the quality factor decreases as the number of time slots between the first and second time slots increases.

2. The user equipment (52) of claim 1 further **characterized by** comprising means for determining the quality factor, $\alpha$, of the pathloss estimate based on in part a number of time slots, D, between the first and second time slot.

3. The user equipment (52) of claim 2 further **characterized in that** a maximum time slot delay is $D_{max}$ and the determined quality factor, $\alpha$, is determined by

$$\alpha = 1 - (D-1) / D_{max}$$

4. The user equipment (52) of any preceding claim further **characterized in that** the setting means (108) sets the transmission power level based on in part a desired received power level, a closed loop factor and an open loop factor, the closed loop factor is based on in part the received power commands and the open loop factor is based on in part the pathloss estimate weighted by the quality factor.

5. The user equipment (52) of claim 4 further **characterized in that** the closed loop factor is updated for each received power command.

6. The user equipment (52) of claim 4 or claim 5 further **characterized in that** the desired received power level is based on in part a target signal to interference ratio and a measured interference level at the first station (50).

7. The user equipment (52) of any one of claims 1 to 3 further **characterized in that** the setting means (108) sets the transmission power level based on in part a desired received power level at the first station (50) and a combined closed loop/open loop factor, the combined closed loop/open loop factor is based on in part the received power commands and the path loss estimate weighted by the quality factor.

8. The user equipment (52) of claim 7 further **characterized in that** the combined factor is updated for each received power command.

9. The user equipment (52) of claim 7 or claim 8 further **characterized in that** the desired received power level is based on in part a target signal to interference ratio and a measured interference level.

**Patentansprüche**

1. Spreizspektrum-Zeitduplex-Benutzergerät (52), wobei das Benutzergerät (52) Rahmen mit Zeitschlittzen für die Kommunikation verwendet, wobei das Benutzergerät (52) eine Einrichtung (50) zum Empfangen von Leistungsbefehlen und eines Sendeleistungspegels und zum Empfangen einer ersten Kommunikation mit dem genannten Sendeleistungspegel in einem ersten Zeitschlitz von einer ersten Station (50) aufweist, wobei das Benutzergerät (52) eine Einrichtung (110) aufweist, welche einen Leistungspegel der empfangenen ersten Kommunikation mißt und eine Einrichtung (112) zum Bestimmen einer Funkfelddämpfungsschätzung teilweise auf der Basis des gemessenen empfangenen ersten Kommunikationsleistungspegels und des ersten Kommunikationssendeleistungspegels, wobei das Benutzergerät (52) **dadurch gekennzeichnet ist, daß** es aufweist.
eine Einrichtung (108) zum Einstellen eines Sendeleistungspegels für eine zweite Kommunikation in einem zweiten Zeitschlitz von dem Benutzergorät (52) an die erste Station (50) teilweise auf der Basis der mit einen Gütefaktor gewichteten Funkfelddämpfungsschätzung und den Leistungsbefehler wobei der Gütefaktor abnimmt, wenn die Anzahl von Zeitschlitzen zwischen den ersten und zweiten Zeitschlitzen zunimmt.

2. Benutzergerät (52) nach Anspruch 1, das ferner **dadurch gekennzeichnet ist, daß** es eine Einrichtung zum Bestimmen des Gütefaktors $\alpha$ der Funkfelddämpfungsschätzung teilweise auf der Basis einer Anzahl von Zeitschlitzen, D, zwischen dem ersten und zweiten Zeitschlitz aufweist.

3. Benutzergerät (52) nach Anspruch 2, das ferner **dadurch gekennzeichnet ist, daß** eine maximale Zeitschlitzverzogerung $D_{max}$ ist und der bestimmte Qualitätsfaktor $\alpha$ bestimmt ist durch:

$$\alpha = 1 - (D-1)/D_{max}$$

**4.** Benutzergerät (52) nach einem der vorhergehenden Ansprüche, ferner **dadurch gekennzeichnet, daß** die Einstelleinrichtung (108) den Sendeleistungspegel teilweise auf der Basis eines gewünschten Empfangsleistungspegels, eines geschlossenen Schleifenfaktors und eines offenen Schleifenfaktors einstellt, wobei der geschlossene Schleifenfaktor teilweise auf den empfangenen Leistungsbefehlen basiert und der offene Schleifenfaktor teilweise auf der mit dem Gütefaktor gewichteten Funkfelddämpfungsschätzung basiert.

**5.** Benutzergerät (52) nach Anspruch 4, das ferner **dadurch gekennzeichnet ist, daß** der geschlossene Schleifenfaktor für jeden empfangenen Leistungsbefehl aktualisiert wird.

**6.** Benutzergerät (52) nach Anspruch 4 oder 5, ferner **dadurch gekennzeichnet, daß** der gewünschte Empfangsleistungspegel teilweise auf einem Ziel-Störabstand und einem gemessenen Störpegel an der ersten Station (50) basiert.

**7.** Benutzergerät (52) nach einem der Ansprüche 1 bis 3, ferner **dadurch gekennzeichnet, daß** die Einstelleinrichtung (108) den Sendeleistungspegel teilweise auf der Basis eines gewünschten Empfangsleistungspegels an der ersten Station (50) und eines kombinierten geschlossenen Schleifen-/offenen Schleifenfaktor einstellt, wobei der kombinierte geschlossene Schleifen-/offene Schleifenfaktor teilweise auf den empfangenen Leistungsbefehlen und der mit dem Gütefaktor gewichteuen Funkfelddämpfungsschätzung basiert.

**8.** Benutzergerät (52) nach Anspruch 7, ferner **dadurch gekennzeichnet, daß** der kombinierte Faktor für jeden empfangenen Leistungsbefehl aktualisiert wird.

**9.** Benutzergerät (52) nach Anspruch 7 oder 8, ferner **dadurch gekennzeichnet, daß** der gewünschte Empfangsleistungspegel teilweise auf einem Ziel-Störabstand und einem gemessenden Störpegel basiert.

**Revendications**

**1.** Equipement utilisateur duplex à répartition dans le temps et à étalement du spectre (52), l'équipement utilisateur (52) utilisant des répartiteurs avec des créneaux temporels pour la communication, l'équipement utilisateur (52) comprenant des moyens (58) permettant de recevoir des commandes de puissance et un niveau de puissance de transmission, et de recevoir une première communication ayant ledit niveau de puissance de transmission dans un premier créneau temporel provenant d'une première station (50), l'équipement utilisateur (52) comprenant des moyens (110) permettant de mesurer un niveau de puissance de la première communication telle que reçue et des moyens (112) permettant de déterminer une estimation d'affaiblissement de voie sur la base en partie du premier niveau de puissance de communication reçu mesuré et du premier niveau de puissance de transmission de communication, l'équipement utilisateur (52) étant **caractérisé en ce qu'**il comprend :

des moyens (108) permettant de définir un niveau de puissance de transmission pour une deuxième communication dans un deuxième créneau temporel à partir de l'équipement utilisateur (52) vers la première station (50) sur la base en partie de l'estimation d'affaiblissement de voie pondérée par un facteur de qualité et des commandes de puissance, dans lequel le facteur de qualité diminue au fur et à mesure que le nombre de créneaux temporels entre les premier et deuxième créneaux temporels augmente.

**2.** Equipement utilisateur (52) selon la revendication 1, **caractérisé en outre en ce qu'**il comprend des moyens permettant de déterminer le facteur de qualité, $\alpha$, de l'estimation d'affaiblissement de voie sur la base en partie d'un nombre de créneaux temporels, D, entre le premier et deuxième créneau temporel.

**3.** Equipement utilisateur (52) selon la revendication 2, **caractérisé en outre en ce qu'**un retard de créneau temporel maximal est $D_{max}$ et le facteur de qualité déterminé, $\alpha$, est déterminé par la formule :

$$\alpha = 1 - (D-1)/D_{max}$$

**4.** Equipement utilisateur (52) selon l'une quelconque des revendications précédentes, **caractérisé en outre en ce que** des moyens de réglage (108) règlent le niveau de puissance de transmission sur la base en partie d'un niveau de puissance reçue souhaité, un facteur de boucle fermée et un facteur de boucle ouverte, le facteur de boucle fermée repose en partie sur les commandes de puissance reçues, et le facteur de boucle ouverte repose en partie sur l'estimation d'affaiblissement de voie pondérée par le facteur de qualité.

**5.** Equipement utilisateur (52) selon la revendication 4, **caractérisé en outre en ce que** le facteur de boucle fermée est mis à jour pour chaque commande de puissance reçue.

**6.** Equipement utilisateur (52) selon l'une quelconque des revendications 4 ou 5, **caractérisé en outre en ce que** le niveau de puissance reçue souhaité repose en partie sur un rapport interférence / signal cible et un niveau d'interférence mesuré au niveau de la première station (50).

**7.** Equipement utilisateur (52) selon l'une quelconque des revendications 1 à 3, **caractérisé en outre en ce que** les moyens de réglage (10B) règlent le niveau de puissance de transmission en partie sur la base d'un niveau de puissance reçue souhaité au niveau de la première station (50), et d'un facteur boucle fermée / boucle ouverte combiné, le facteur boucle fermée / boucle ouverte combiné repose en partie sur les commandes de puissance reçues et l'estimation d'affaiblissement de voie pondérée par le facteur de qualité.

**8.** Equipement utilisateur (52) selon la revendication 7, **caractérisé en outre en ce que** le facteur combiné est mis à jour pour chaque commande de puissance reçue.

**9.** Equipement utilisateur (52) selon l'une quelconque des revendications 7 ou 8, **caractérisé en outre en ce que** le niveau de puissance reçue souhaité repose en partie sur le rapport interférence / signal cible et un niveau d'interférence mesuré.

Fig. 1

EP 1 313 233 B1

Fig. 2

38 ~ 
```
GENERATE A POWER CONTROL
COMMAND BASED ON A SIGNAL TO
INTERFERENCE RATIO OF A
COMMUNICATION SENT FROM THE
TRANSMITTING STATION
```

40 ~ 
```
TRANSMIT A COMMUNICATION AND THE
POWER COMMAND FROM THE RECEIVING
STATION
```

42 ~ 
```
DETERMINE THE RECEIVED POWER LEVEL
OF THE COMMUNICATION FROM THE
RECEIVING STATION AT THE
TRANSMITTING STATION
```

44 ~ 
```
DETERMINE AN ESTIMATED PATH LOSS
BETWEEN THE RECEIVING AND
TRANSMITTING STATION BY
SUBTRACTING THE RECEIVED
COMMUNICATION'S POWER LEVEL IN dB
FROM THE COMMUNCATION'S
TRANSMISSION POWER LEVEL IN dB
```

46 ~ 
```
DETERMINE THE QUALITY OF THE
ESTIMATED PATH LOSS
```

48 ~ 
```
SETTING THE TRANSMITTING STATION'S
POWER LEVEL BASED ON IN PART THE
POWER COMMAND AND WEIGHTING THE
ESTIMATED PATH LOSS BASED ON THE
ESTIMATE'S QUALITY
```

Fig. 3

Fig. 4

Fig. 5

Fig. 6

Fig. 7

Fig. 8

Fig. 9

Fig. 10